# DEMANDE DE BREVET EUROPEEN

(11) **EP 3 626 486 A1**
(43) Date de publication de la demande: **25.03.2020**
(21) Numéro de dépôt: 19198469.9
(22) Date de dépôt: 19.09.2019
(51) Int. Cl.: B60G 15/06

(54) **BUTÉE DE SUSPENSION DE VÉHICULE AUTOMOBILE**

(30) Priorité: 20.09.2018 FR 1858537
(71) Demandeur: NTN-SNR ROULEMENTS, 74000 Annecy (FR)
(72) Inventeur: BONNAUDET, Aurélien, 74000 Annecy (FR); PETERSCHMITT, Cyril, 74330 La Balme de Sillingy (FR)
(74) Mandataire: Sayettat, Julien Christian

(57) **Abrégé**

L'invention concerne une butée comprenant une coupelle supérieure (1) et une coupelle inférieure (2) agencées pour former entre elles au moins une chambre annulaire d'étanchéité (6) qui est délimitée latéralement entre une paroi intérieure (2a) et une paroi extérieure (1a) issues de respectivement une desdites coupelles, ladite chambre étant équipée d'un dispositif d'étanchéité (8) comprenant un élément (9) présentant au moins un secteur (9a) disposé en interférence d'étanchéité avec une desdites parois, ledit élément d'étanchéité présentant en outre un secteur (9b) de retenue qui est agencé pour pouvoir interagir avec une des parois (2a) pour assurer le maintien du montage des coupelles (1, 2), le dispositif d'étanchéité (8) comprenant une armature (23) sur laquelle l'élément d'étanchéité (9) est associé, ladite armature étant fixée dans la paroi extérieure (1a) en mettant les secteurs (9a, 9b) respectivement en interférence d'étanchéité et en interaction de retenue avec la paroi intérieure (2a).

## Description

L'invention concerne une butée de suspension de véhicule automobile, notamment destinée à être intégrée dans une jambe de suspension télescopique d'une roue directrice de véhicule automobile.

L'invention s'applique à une butée de suspension comprenant une coupelle supérieure fixe destinée à être associée à la caisse du véhicule, une coupelle inférieure tournante pouvant comporter un appui pour le ressort de suspension, et des corps roulants disposés entre lesdites coupelles pour permettre leur rotation relative. En variante, les coupelles peuvent être montées en rotation relative de façon lisse, avec ou sans interposition d'une rondelle de friction entre elles.

En particulier, l'invention s'applique à une telle butée de suspension, dans laquelle les coupelles sont agencées pour former entre elles au moins une chambre annulaire dans laquelle un élément d'étanchéité est disposé, et ce pour empêcher d'une part les fuites du lubrifiant présent dans l'espace entre les coupelles, et d'autre part la contamination dudit espace avec des polluants extérieurs.

Par ailleurs, après son montage sur un véhicule automobile, la cohésion de la butée est garantie par serrage axial dans ledit montage. Toutefois, avant son montage, il est souhaitable d'assurer la cohésion des différents composants de la butée, notamment durant son transport et/ou sa manipulation lors dudit montage.

Pour ce faire, il est connu de prévoir des crochets formés sur une coupelle pour être engagés dans des moyens complémentaires, notamment une cavité, formés sur l'autre coupelle.

Le document FR-3 025 457 décrit une butée de suspension dont l'élément d'étanchéité permet en outre d'assurer le maintien du montage de la coupelle supérieure sur la coupelle inférieure. Pour ce faire, l'élément d'étanchéité est monté mobile par rapport à la coupelle inférieure et comprend un segment disposé en interférence d'étanchéité avec la coupelle supérieure, ladite coupelle supérieure présentant une jupe périphérique annulaire qui est équipée de moyens de retenue agencés pour pouvoir interagir avec ledit segment.

Toutefois, lors des interactions entre la coupelle supérieure et l'élément d'étanchéité, les déplacements dudit élément d'étanchéité et/ou les déformations de la jupe périphérique peuvent compromettre les fonctions d'étanchéité et/ou de retenue attendues.

L'invention vise à perfectionner l'art antérieur en proposant notamment une butée de suspension dont la cohésion avant son montage sur le véhicule est assurée par l'intermédiaire de son dispositif d'étanchéité, et ce de façon particulièrement fiable et sans compromettre la fonction d'étanchéité dudit dispositif.

A cet effet, l'invention propose une butée de suspension de véhicule automobile, ladite butée comprenant une coupelle supérieure et une coupelle inférieure qui sont montées en rotation relative autour d'un axe, lesdites coupelles étant agencées pour former entre elles au moins une chambre annulaire d'étanchéité qui est délimitée latéralement entre une paroi intérieure et une paroi extérieure issues de respectivement une desdites coupelles, ladite chambre étant équipée d'un dispositif d'étanchéité comprenant un élément présentant au moins un secteur disposé en interférence d'étanchéité avec une desdites parois, ledit élément d'étanchéité présentant en outre un secteur de retenue qui est agencé pour pouvoir interagir avec une des parois pour assurer le maintien du montage des coupelles, le dispositif d'étanchéité comprenant une armature sur laquelle l'élément d'étanchéité est associé, ladite armature étant fixée dans la paroi extérieure en mettant les secteurs d'étanchéité et de retenue respectivement en interférence d'étanchéité et en interaction de retenue avec la paroi intérieure.

D'autres particularités et avantages de l'invention apparaîtront dans la description qui suit, faite en référence aux figures jointes, dans lesquelles :
- la figure 1 représente en coupe axiale une butée de suspension selon un mode de réalisation de l'invention, la figure 1a étant une vue partielle agrandie de la zone A de la figure 1 ;
- les figures 2 à 6 sont des vues analogues à la figure 1a centrées plus particulièrement sur la disposition de l'élément d'étanchéité dans la chambre annulaire, et représentent chacune respectivement un autre mode de réalisation de l'invention.

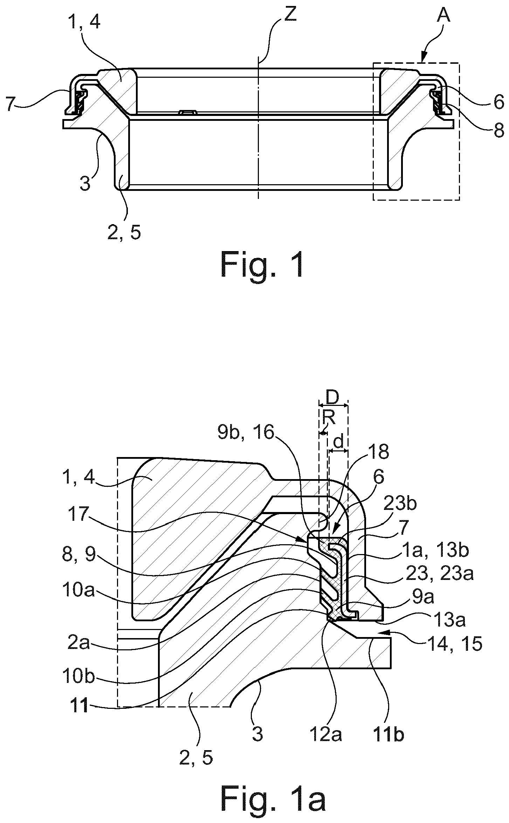

Dans cette description, les termes de positionnement dans l'espace sont pris en référence à l'axe de rotation Z de la butée de suspension (vertical sur la figure 1). En particulier, le terme « intérieur » est relatif à une disposition proche de cet axe Z et le terme « extérieur » est relatif à une disposition à distance de cet axe Z. Par ailleurs, les termes « supérieur » et « inférieur » sont relatifs à la disposition de la butée telle que représentée sur la figure 1.

Une roue d'un véhicule automobile, notamment une roue directrice, est montée sur le châssis par l'intermédiaire d'une jambe de force qui permet la suspension de la caisse relativement au sol. A cet effet, la jambe de force comprend classiquement un amortisseur, un ressort de suspension ainsi qu'une butée de suspension sur laquelle le ressort vient en appui directement ou indirectement.

En relation avec les figures, on décrit ci-dessous une butée de suspension qui comprend une coupelle supérieure fixe 1 destinée à être associée à la caisse du véhicule notamment via un bloc filtrant, et une coupelle inférieure tournante 2 comportant un appui 3 pour le ressort de suspension, lesdites coupelles étant montées en rotation relative autour de l'axe Z. Ainsi, lorsque le ressort est sollicité en compression et en détente, l'enroulement des spires de ce dernier sur elles-mêmes est modifié, ce qui entraîne la rotation de la coupelle inférieure 2. En outre, le braquage des roues induit également une rotation de la coupelle inférieure 2.

De façon connue, une butée de suspension peut comprendre des corps roulants qui sont disposés entre les coupelles 1, 2 pour permettre leur rotation relative autour de l'axe Z. Pour ce faire, les coupelles supérieure 1 et inférieure 2 peuvent comprendre chacune une rondelle, notamment réalisée en tôle emboutie, qui est pourvue d'une piste de roulement respectivement inférieure et supérieure pour les corps roulants. En variante, les coupelles 1, 2 peuvent être montées en rotation relative de façon lisse, avec ou sans interposition d'une rondelle de friction entre elles.

La butée peut comprendre en outre deux pièces d'habillage, notamment réalisées par moulage d'un matériau thermoplastique rigide, par exemple de type polyamide 6.6. Ces pièces sont respectivement un couvercle 4 associé sur la rondelle supérieure pour être interposé entre le châssis et ladite rondelle supérieure, et un support 5 associé sous la rondelle inférieure, ledit support comprenant l'appui ressort 3. Ces pièces d'habillage 4, 5 permettent notamment une reprise des efforts du ressort et éventuellement de ceux de la butée de choc.

Les coupelles 1, 2 sont agencées pour former entre elles au moins une chambre annulaire 6 qui est délimitée latéralement entre une paroi intérieure 2a et une paroi extérieure 1a issues de respectivement une desdites coupelles.

Dans les modes de réalisation représentés, le couvercle 4 comprend une jupe périphérique annulaire extérieure 7 sur laquelle s'étend la paroi extérieure 1a, le support 5 présentant la paroi intérieure 2a délimitant la chambre annulaire extérieure 6 avec la paroi extérieure 1a de ladite jupe périphérique.

En particulier, la chambre annulaire 6 présente un jeu radial de sorte à permettre la rotation de la coupelle inférieure 2 par rapport à la coupelle supérieure 1 sans interférence entre celles-ci.

Pour empêcher d'une part les fuites du lubrifiant présent dans l'espace entre les coupelles 1, 2, et d'autre part la contamination dudit espace avec des polluants extérieurs, la chambre annulaire 6 est équipée d'un dispositif d'étanchéité 8 comprenant un élément 9 présentant au moins un secteur 9a disposé en interférence d'étanchéité avec une des parois 1a, 2a.

Selon une réalisation, la chambre 6 peut contenir une substance visqueuse pour améliorer l'étanchéité conférée par l'élément d'étanchéité 9. En particulier, la substance peut également présenter une fonction de lubrification relativement aux déplacements de l'élément d'étanchéité 9 dans la chambre 6.

L'élément d'étanchéité 9 est notamment réalisé en matériau souple, par exemple en élastomère, notamment à base de copolymère butadiène nitrile (NBR), éventuellement renforcé mécaniquement par des charges telles que du noir de carbone, de NBR hydrogéné (HNBR), de fluoropolymère ou de polyacrylate.

Le secteur d'étanchéité 9a présente au moins une lèvre 10a, 10b qui est disposée en contact frottant sur la paroi intérieure 2a. Dans les modes de réalisation représentés, le secteur d'étanchéité 9a présente deux lèvres supérieure 10a et inférieure 10b qui sont espacées axialement en étant chacune en contact frottant sur la paroi intérieure 2a.

En particulier, les lèvres d'étanchéité 10a, 10b sont inclinées vers le haut, afin d'éviter leur retournement lors du montage du dispositif d'étanchéité 8 sur la coupelle inférieure 2.

De façon avantageuse, l'élément d'étanchéité 9 présente au moins une portion de chicanage afin de limiter la pénétration de polluants extérieurs dans la chambre annulaire 6. En relation avec les figures 1a, 2 et 3, la portion de chicanage présente un déflecteur 12a qui forme un jeu réduit avec une portée inférieure 11 de la paroi intérieure 2a.

Le déflecteur 12a présente une forme et/ou une épaisseur agencées pour permettre audit déflecteur de protéger les lèvres 10a, 10b contre d'éventuelles projections d'eau et/ou de boue, notamment lorsque le véhicule est utilisé par mauvais temps sur un terrain boueux et/ou couvert de flaques d'eau, ou nettoyé à l'aide d'un jet d'eau haute pression. En particulier, la portée inférieure 11 présente une section supérieure axiale 11a en regard de laquelle le déflecteur 12a est disposé.

Dans les modes de réalisation représentés, la portée inférieure 11 présente une section inférieure radiale 11b qui est disposée en regard axial d'une section inférieure radiale 13a de la jupe 7, lesdites sections formant entre elles une ouverture extérieure 14 de la chambre d'étanchéité 6. En particulier, les sections 11b, 13a forment entre elles un jeu réduit 15 de chicanage de l'ouverture 14, afin de former un barrage destiné à diminuer la vitesse et/ou la puissance d'une projection de polluant entrant par ladite ouverture.

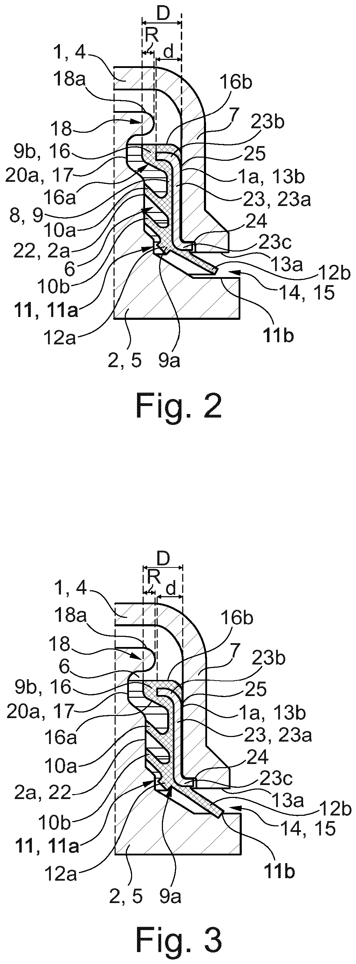

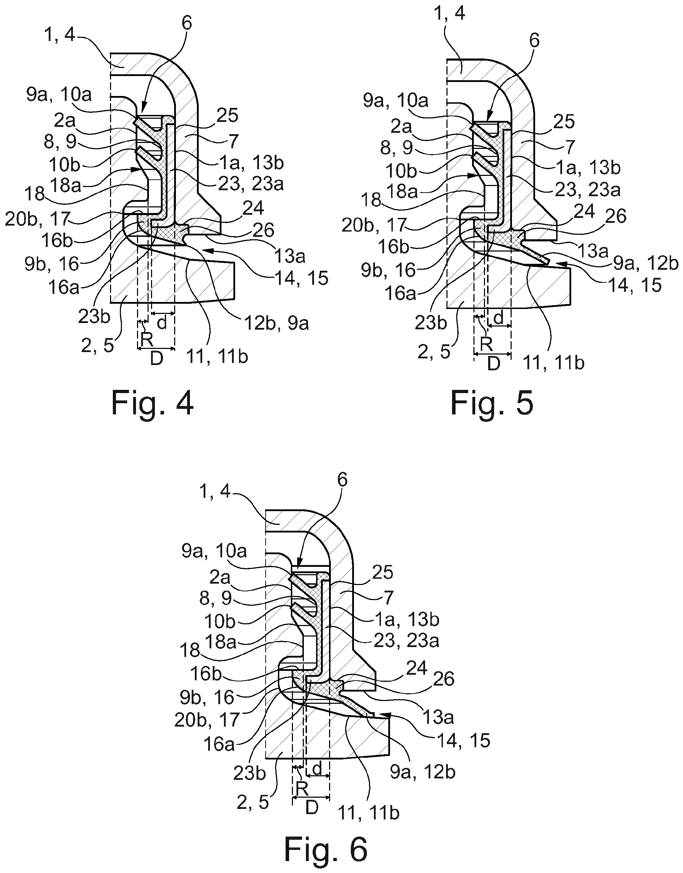

Sur les figures 2 et 5, la portion de chicanage présente une couronne 12b qui forme un jeu réduit avec la portée inférieure 11, notamment en étant disposée en regard de la section inférieure radiale 11b, afin de limiter l'entrée par l'ouverture 14 de polluants extérieurs dans la chambre d'étanchéité 6. En particulier, la couronne 12b est inclinée pour éviter son retournement lors du montage du dispositif d'étanchéité 8 sur la coupelle inférieure 2.

Sur les figures 3 et 6, les couronnes 12b sont en contact frottant sur la section inférieure radiale 11b, la figure 6 illustrant l'utilisation d'une couronne 12b amincie. Par ailleurs, la figure 4 illustre une couronne 12b de longueur réduite qui est disposée dans l'ouverture 14.

Pour assurer la cohésion des composants de la butée avant son montage sur un véhicule automobile, l'élément d'étanchéité 9 présente en outre un secteur 9b de retenue qui est agencé pour pouvoir interagir la paroi 2a afin d'assurer le maintien du montage des coupelles 1, 2 par l'intermédiaire dudit élément d'étanchéité.

Dans les modes de réalisation représentés, le secteur 9b de retenue présente un bourrelet 16 disposé avec jeu dans une gorge annulaire 17 de la paroi intérieure 2a, la dimension radiale D du bourrelet étant telle qu'en cas de déplacement axial relatif des coupelles 1, 2, il vienne en butée axiale sur un crochet 18 formé sur un bord supérieur de la gorge 17.

Pour conférer cette fonction de cohésion de la butée par retenue relative des coupelles 1, 2, le bourrelet 16 peut présenter une forme annulaire continue, ou être formé d'une pluralité de saillies réparties angulairement sur le secteur 9b de retenue. Par ailleurs, le jeu entre le bourrelet 16 et la gorge 17 est agencé pour ne pas venir interférer lors de la rotation relative des coupelles 1, 2, ou lors de leurs déformations en fonctionnement normal.

Sur les figures 1a, 2 et 3, la paroi intérieure 2a présente une section supérieure 20a dans laquelle la gorge 17 est formée, le secteur d'étanchéité 9b étant disposé sous le bourrelet 16. En particulier, la paroi intérieure 2a présente une portée centrale 22 s'étendant sensiblement axialement entre la section supérieure 20a de retenue et la portée inférieure 11 de chicanage, et sur laquelle les lèvres d'étanchéité 10a, 10b sont en contact frottant.

Sur les figures 4 à 6, la paroi intérieure 2a présente une section inférieure 20b dans laquelle la gorge 17 est formée. En particulier, le secteur d'étanchéité 9a présente deux lèvres d'étanchéité 10a, 10b disposées en contact frottant au-dessus de la section inférieure 20b, ainsi qu'une couronne 12b de chicanage formant un jeu réduit d'étanchéité au-dessous de ladite section inférieure.

De façon avantageuse, sur les figures 4 à 6, le bourrelet 16 forme un jeu réduit d'étanchéité avec la section inférieure 20b, afin de limiter l'entrée de polluants extérieurs dans la chambre annulaire 6.

Sur les figures, le bourrelet 16 présente une face inférieure 16a inclinée destinée à venir en appui sur une face supérieure 18a du crochet 18 lors du montage de la butée, afin de faciliter la déformation dudit bourrelet lors dudit appui, et donc le passage dudit bourrelet au-delà dudit crochet. En particulier, comme représenté sur les figures 4 à 6, la face supérieure 18a peut être elle-même inclinée pour faciliter davantage le passage du bourrelet 16.

Le bourrelet 16 présente également une face supérieure 16b sensiblement radiale destinée à venir en butée axiale sous le crochet 18 en cas de déplacement axial relatif des coupelles 1, 2, afin d'assurer la cohésion de la butée par maintien desdites coupelles après le montage de la butée. En outre, pour empêcher le retrait du bourrelet 16 hors de la gorge 17, le recouvrement radial R entre le bourrelet 16 et le crochet 18 présente une dimension importante, notamment comprise entre 20 et 50% de la dimension radiale D dudit bourrelet.

Pour limiter le risque de déformation du couvercle 4 lors des interactions entre le dispositif d'étanchéité 8 et le support 5, le dispositif d'étanchéité 8 comprend une armature 23 sur laquelle l'élément d'étanchéité 9 est associé, ladite armature étant fixée dans la paroi extérieure 1a en mettant les secteurs d'étanchéité 9a et de retenue 9b respectivement en interférence d'étanchéité et en interaction de retenue avec la paroi intérieure 2a.

L'armature 23 est rigide, notamment réalisée en tôle métallique emboutie, l'élément d'étanchéité 9 pouvant lui être associé par surmoulage.

La paroi extérieure 1a présente une section axiale 13b dans laquelle une section axiale 23a de l'armature 23 est emmanchée, ce qui permet de faciliter le montage du dispositif d'étanchéité 8 sur le couvercle 4 tout en rigidifiant la jupe 7. En particulier, ce montage peut être effectué au moyen de goderons.

L'élément d'étanchéité 9 comprend un voile 25 destiné à être interposé entre la paroi extérieure 1a et la section axiale 23a de l'armature 23 lors du montage du dispositif d'étanchéité 8 sur le couvercle 4, afin d'assurer l'étanchéité statique dudit montage.

De façon avantageuse, l'armature 23 présente un repli radial 23b qui est disposé dans le bourrelet 16, afin de rigidifier ledit bourrelet, et ainsi limiter les risques de retrait hors de la gorge 17 après le montage. De façon avantageuse, la dimension d du repli radial 23b est suffisante pour fiabiliser la fonction de retenue conférée par le bourrelet 16, tout en étant telle qu'il ne vienne pas en butée sur le crochet 18, afin de permettre le passage du bourrelet 16 au-delà dudit crochet lors du montage des coupelles 1, 2.

Dans les modes de réalisation représentés, la dimension d du repli radial 23b est supérieur au recouvrement R entre le bourrelet 16 et le crochet 18, ledit repli étant par ailleurs entièrement enrobé dans ledit bourrelet.

Pour renforcer le montage du dispositif d'étanchéité 8 sur le couvercle 4, la jupe 7 comprend une gorge 24 formée entre les sections supérieure 13b et inférieure 13a, dans laquelle est disposé un repli radial inférieur 23c de l'armature 23 (figures 1a, 2 et 3). Les figures 4 à 6 prévoient la disposition dans la gorge 24 d'un bourrelet 26 de l'élément d'étanchéité 9.

## Revendications

1. Butée de suspension de véhicule automobile, ladite butée comprenant une coupelle supérieure (1) et une coupelle inférieure (2) qui sont montées en rotation relative autour d'un axe (Z), lesdites coupelles étant agencées pour former entre elles au moins une chambre annulaire d'étanchéité (6) qui est délimitée latéralement entre une paroi intérieure (2a) et une paroi extérieure (1a) issues de respectivement une desdites coupelles, ladite chambre étant équipée d'un dispositif d'étanchéité (8) comprenant un élément (9) présentant au moins un secteur (9a) disposé en interférence d'étanchéité avec une desdites parois, ledit élément d'étanchéité présentant en outre un secteur (9b) de retenue qui est agencé pour pouvoir interagir avec une des parois (2a) pour assurer le maintien du montage des coupelles (1, 2), ladite butée étant **caractérisée en ce que** le dispositif d'étanchéité (8) comprend une armature (23) sur laquelle l'élément d'étanchéité (9) est associé, ladite armature étant fixée dans la paroi extérieure (1a) en mettant les secteurs d'étanchéité (9a) et de retenue (9b) respectivement en interférence d'étanchéité et en interaction de retenue avec la paroi intérieure (2a).

2. Butée de suspension selon la revendication 1, **caractérisée en ce que** le secteur d'étanchéité (9a) présente au moins une lèvre (10a, 10b) qui est disposée en contact frottant sur la paroi intérieure (2a).

3. Butée de suspension selon la revendication 2, **caractérisée en ce que** la paroi intérieure (2a) présente une portée centrale (22) sur laquelle la lèvre d'étanchéité (10a, 10b) est en contact frottant.

4. Butée de suspension selon l'une quelconque des revendications 1 à 3, **caractérisée en ce que** le secteur d'étanchéité (9a) présente au moins une portion de chicanage (12a, 12b).

5. Butée de suspension selon la revendication 4, **caractérisée en ce que** la portion de chicanage présente un déflecteur (12a) et/ou une couronne (12b) qui forme un jeu réduit avec une portée inférieure (11) de la paroi intérieure (2a).

6. Butée de suspension selon la revendications 5, **caractérisée en ce que** la portée inférieure (11) présente une section inférieure radiale (11b) en regard de laquelle une couronne (12b) est disposée, et une section supérieure axiale (11a) en regard de laquelle un déflecteur (12a) est disposé.

7. Butée de suspension selon l'une quelconque des revendications 1 à 6, **caractérisée en ce que** le secteur (9b) de retenue présente un bourrelet (16) disposé avec jeu dans une gorge annulaire (17) de la paroi intérieure (2a), la dimension radiale (D) du bourrelet (16) étant telle qu'en cas de déplacement axial relatif des coupelles (1, 2), il vienne en butée axiale sur un crochet (18) formé sur un bord supérieur de la gorge (17).

8. Butée de suspension selon la revendication 7, **caractérisée en ce que** le recouvrement radial (R) entre le bourrelet (16) et le crochet (18) est compris entre 20 et 50 % de la dimension radiale (D) dudit bourrelet.

9. Butée de suspension selon l'une des revendications 7 ou 8, **caractérisée en ce que** le bourrelet (16) présente une face supérieure (16b) sensiblement radiale et une face inférieure (16a) inclinée.

10. Butée de suspension selon l'une quelconque des revendications 7 à 9, **caractérisée en ce que** l'armature (23) présente un repli radial (23b) qui est disposé dans le bourrelet (16).

11. Butée de suspension selon la revendication 10, **caractérisée en ce que** la dimension (d) du repli radial (23b) est telle qu'il ne vienne pas en butée sur le crochet (18).

12. Butée de suspension selon l'une quelconque des revendications 7 à 11, **caractérisée en ce que** la paroi intérieure (2a) présente une section supérieure (20a) dans laquelle la gorge (17) est formée, le secteur d'étanchéité (9a) étant disposé sous le bourrelet (16).

13. Butée de suspension selon l'une quelconque des revendications 7 à 11, **caractérisée en ce que** la paroi intérieure (2a) présente une section inférieure (20b) dans laquelle la gorge (17) est formée.

14. Butée de suspension selon la revendication 13, **caractérisée en ce que** le bourrelet (16) forme un jeu réduit d'étanchéité avec la section inférieure (20b).

15. Butée de suspension selon l'une des revendications 13 ou 14, **caractérisée en ce que** secteur d'étanchéité (9a) présente au moins une lèvre (10a, 10b) qui est disposée en contact frottant au-dessus de la section inférieure (20b), et/ou au moins une portion de chicanage (12a, 12b) qui forme un jeu réduit d'étanchéité au-dessous de la section inférieure (20b).

16. Butée de suspension selon l'une quelconque des revendications 1 à 15, **caractérisée en ce que** les coupelles supérieure (1) et inférieure (2) comprennent respectivement un couvercle (4) et un support (5), la chambre d'étanchéité (6) étant formée entre une paroi intérieure (2a) du support (5) et une paroi extérieure (1a) formée dans une jupe périphérique (7) du couvercle.

17. Butée de suspension selon l'une quelconque des revendications 1 à 16, **caractérisée en ce que** la paroi extérieure (1a) présente une section axiale (13a) dans laquelle une section axiale (23a) de l'armature (23) est emmanchée.

18. Butée de suspension selon l'une quelconque des revendications 1 à 17, **caractérisée en ce que** l'armature (23) est rigide, notamment réalisée en tôle métallique emboutie, l'élément d'étanchéité (9) étant réalisé en matériau souple, par exemple en élastomère.
